# EUROPEAN PATENT APPLICATION

(11) **EP 1 923 449 A1**
(43) Date of publication of application: **21.05.2008**
(21) Application number: 06122845.8
(22) Date of filing: 24.10.2006
(51) Int. Cl.: C09K 11/77, G01N 33/58

(54) **Colloidal suspensions of nanoscale particles**

(71) Applicant: Koninklijke Philips Electronics N.V., 5621 BA Eindhoven (NL); Philips Intellectual Property & Standards GmbH, 20099 Hamburg (DE)
(72) Inventor: The designation of the inventor has not yet been filed
(74) Representative: Van Velzen, Maaike Mathilde

(57) **Abstract**

The present invention relates to a suspension of colloidal nanoscale particles based on lanthanide phosphates and/or lanthanide vanadates, and in particular to a stabilised suspension of colloidal nanoscale particles comprising carboxylic acid ligands. The colloidal nanoscale particles of the stabilised suspension have a low average particle size and a narrow particle size distribution. The present invention furthermore relates to a method of producing the suspensions of colloidal nanoscale particles, and particularly to a method where the lanthanide cation is bound to a chelating agent before it is converted to lanthanide phosphate or lanthanide vanadate. The invention also relates to various uses of the suspension.

## Description

### FIELD OF THE INVENTION

The invention relates to a suspension of colloidal nanoscale particles based on lanthanide phosphates and/or lanthanide vanadates, and in particular to a stabilised suspension of colloidal nanoscale particles, preferably having a low average particle size and a narrow particle size distribution. The invention furthermore relates to a method for producing the suspension of colloidal nanoscale particles and to various uses of the suspension.

### BACKGROUND OF THE INVENTION

Luminescent and non-luminescent inorganic nanoscale particles are widely applied for imaging and diagnostic purposes in medicine and in the development of contrast agents or therapeutics. QDots show high quantum efficiencies (> 50%) and emission in the visible range, whereby the excitation and emission band position strongly depend on the particle size and the particle size distribution. However, the most commonly applied materials are so-called quantum dots (QDots), e.g. CdS or CdSe QDots, which unfortunately are highly reactive and toxic.

In WO 2004/096714 a method of preparing nanoscale YVO₄ and Y(P,V)O₄ particles with a number of different dopants is disclosed. These nanoscale particles are reported to have relatively high quantum efficiencies.

However, there is still a strong demand for nanoscale particles having improved properties and for cheap and environmentally friendly synthesis protocols for production these nanoscale particles. Particularly, there is a need for synthesis protocols which are well suited for production in industrial settings.

### SUMMARY OF THE INVENTION

The present inventors have realised that an important problem of the manufacturing of nanoscale particles of ortho-phosphates and ortho-vandates is their tendency to strong agglomeration and thus to grow into too large particles.

In order to properly adjust clearance of the nanoscale particles in *in vivo* applications, such as medical imaging, the nanoscale particles should preferably have a small average particle size, and preferably also a narrow particle size distribution. Furthermore it is desirable that the nanoscale particles are prepared by a highly reproducible synthesis procedure that leads to nanoscale particles that are stable for at least 24 h in a colloidal suspension, which preferably comprises a protic solvent.

Thus, an object of the present invention is to provide a suspension of nanoscale particles as well as methods of preparing them, which suspension and methods alleviates, mitigates or eliminates one or more of the above or other disadvantages singly or in any combination.

Another object of the present invention is to provide nanoscale particles having a small average particle size and/or a narrow particle size distribution and/or being stable for at least 24 h in a colloidal suspension, which preferably comprises a protic solvent.

In the context of the present invention, the term "and/or" used in the context "X and/or Y" should be interpreted as "X", or "Y", or "X and Y", i.e. disclosing 3 separate embodiments.

An aspect of the invention relates to a colloidal suspension of nanoscale particles comprising:
a population of nanoscale particles comprising
   a lattice which comprises:
   - vanadate and/or phosphate,
   - a lanthanide cation (Ln³⁺),
   and a carboxylic acid ligand having a pKₛ value in the range of 5-14, said carboxylic acid ligand is attached to said lattice, and
a solvent.

In the context of the present invention, "Ln" is the abbreviation for lanthanidem and "RE" is the abbreviation for "rare earth metal".

Another aspect of the invention relates to a method of preparing a suspension of nanoscale particles, the method comprising the steps of
a) providing a solution having a pH in the range of 8-14, said solution comprising
   - a lanthanide cation (Ln³⁺) complexed with a chelating agent
   - a source of ortho-phosphate and/or ortho-vanadate,
   - a carboxylic acid ligand, and
   - a solvent,
b) incubating the solution at a temperature and for a time sufficient for nanoscale particles to form.

Yet an aspect of the invention relates to a method of detecting a target in an object, the method comprising the steps of
i) providing a colloidal suspension of nanoscale particles as defined herein,
ii) contacting the object with said colloidal suspension of nanoscale particles,
iii) at least detecting one or more items from the group consisting of
   - has any nanoscale particle bound to the target in the object,
   - how many nanoscale particles have been bound to the target in the object, and
   - where in the object has the nanoscale particles been bound.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Some embodiments of the invention will be described, by way of example only, with reference to the drawings, in which
Fig. 1 shows a sketch of a cross section of a nanoscale particle (1) including carboxylic acid ligands (3) attached to the lattice (2),
Fig. 2 shows a sketch of a cross section of a nanoscale particle (1) including antenna ligands (4) attached to the lattice (2),
Fig. 3 shows the emission spectrum and quantum efficiency of YPO₄:Eu(5%) colloidal suspensions as synthesized,
Fig. 4 shows the emission spectrum of YPO₄:Tb(10%) colloidal suspensions as synthesized, and
Fig. 5 shows a TEM image of YPO₄:Tb(10%) colloidal suspension.

### DETAILED DESCRIPTION OF THE INVENTION

An aspect of the invention relates to a colloidal suspension of nanoscale particles comprising:
a population of nanoscale particles comprising
   a lattice which comprises:
   - vanadate and/or phosphate,
   - a lanthanide cation (Ln³⁺),
   and a carboxylic acid ligand having a pKₛ value in the range of 5-14, said carboxylic acid ligand is attached to said lattice, and
a solvent.

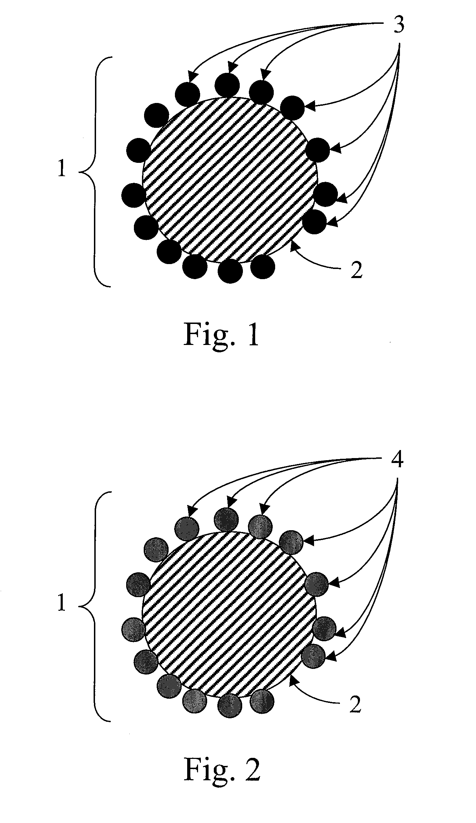

A sketch of the cross section of a single particle is shown in Fig. 1. The particle (1) contains a lattice (2) to which carboxylic acid ligands (3) have been attached. The lattice comprises vanadate and/or phosphate as well as lanthanide cations (Ln³⁺).

In the context of the present invention, the term "carboxylic acid ligand" relates to a molecule or a complex of molecules containing one or more carboxylic acid functionalities. A carboxylic acid ligand may both be fully protonated (-COOH), fully deprotonated (-COO⁻), or partly protonated. To be partly deprotonated, some of the carboxy groups of the carboxylic acid ligand are protonated and some of carboxy groups are deprotonated. The carboxylic acid ligand may comprise one ore more further functional groups. Examples of useful further functional groups are a hydroxy group, a thiol group, an amino group, or any combination thereof.

The present inventors have found that carboxylic acid ligand having a pKₛ value in the range of 5-14 advantageously can used to stabilise the nanoscale particles in protic solvents.

While all lanthanide cations are useful for the present invention, it is presently preferred that at least one lanthanide cation is selected from the group consisting of Sc³⁺, Y³⁺, La³⁺, Gd³⁺, and Lu³⁺.

Some lanthanide ions, such as Gd³⁺, render the resulting nanoscale particles useful as a contrast agent for e.g. magnetic resonance imaging and/or for X-ray imaging.

In some embodiments of the invention, the lattice of the nanoscale particles comprises at least two different types of lanthanide cations, such as at least three different types of lanthanide cations, or at least four different types of lanthanide cations.

The lattice of the nanoscale particles may e.g. have a stoichiometric formula of approximately Ln(P₁₋ₓVₓ)O₄, wherein x is a number in the range of 0 to 1.

The nanoscale particles according to the invention typically have an average particle size in the range of 1 nm - 20 nm. In the context of the present invention, the average particle size is measured by dynamic light scattering.

In preferred embodiments of the invention, the average particle size of the nanoscale particles is in the range of 2 nm - 15 nm, such as 3 nm - 10 nm, and such as 4 nm - 9 nm.

In other preferred embodiments of the invention, the average particle size of the nanoscale particles is in the range of 1 nm - 10 nm, preferably in the range of 2 nm - 6 nm, and even more preferred in the range of 3 nm - 5 nm.

In some embodiments it is preferred that the nanoscale particles have a narrow particle size distribution. The nanoscale particles may e.g. have a particle size distribution of d₁₀>2 nm and d₉₀<15 nm, such as d₁₀>3 nm and d₉₀<10 nm, or d₁₀>4 nm and d₉₀<8 nm. The particle size distribution is preferably determined via Dynamic Light Scattering. The terms d₁₀ and d₉₀ means the particle size of the 10% percentile of the nanoscale particles and the particle size of the 90% percentile of the nanoscale particles, respectively.

In some embodiments the particle size distribution of d₁₀>2 nm and d₉₀<9 nm, such as d₁₀>3 nm and d₉₀<8 nm is desirable.

A narrow particle size distribution and a low average particle size are advantageous in many *in vivo* applications such as medical imaging. Thus in preferred embodiments of the invention, the nanoscale particles have an average particle size in the range of 1 nm -5 nm and a particle size distribution of d₁₀>2 nm and d₉₀<9 nm, and even more preferred that the nanoscale particles have an average particle size in the range of 2 nm - 4 nm and a particle size distribution of d₁₀>3 nm and d₉₀<8 nm.

In a preferred embodiment of the invention, the lattice of the colloidal suspension of nanoscale particles furthermore comprises a rare earth metal cation (RE³⁺).

The rare earth metal cation doped into the lattice of the nanoscale particles provides the nanoscale particles with luminescent properties such as fluorescence.

In preferred embodiments of the invention, the quantum efficiency of the nanoscale particles are at least 1%, preferably at least 5%, and even more preferably at least 10% such as at least 25%.

The molar ratio between Ln³⁺+ RE³⁺ : chelating agent : X043- in the lattice is typically in the range 0.5-2 : 0.5-2 : 0.5-2, preferably in the range 0.75-1.5 : 0.75-1.5 : 0.75-1.5, and even more preferred in the range 0.9-1.1 : 0.9-1.1 : 0.9-1.1, such as approximately 1:1:1. XO₄³⁻ is the sum of VO₄³⁻ and PO₄³⁻.

When the rare earth metal cation is present in the lattice, the molar ratio between Ln³⁺: RE³⁺ is normally in the range of 100:0.1 - 100: 200, such as 100:1 - 100:100, and preferably in the range 100:2 - 100:50, such as 100:3 - 100:20.

All rare earth metal cations having a 3+ charge are deemed useful for the present invention. It is presently preferred that at least one rare earth metal cation is selected from the group consisting of Ce³⁺ Pr³⁺, Nd³⁺, Sm³⁺, Eu³⁺ , Gd³⁺, Tb³⁺, Dy³⁺, Ho³⁺ , Er³⁺, Tm³⁺, Yb³⁺, and combinations thereof.

In some embodiments of the invention, the lattice comprises at least 2 different rare earth metal cations, such as at least 3 different rare earth metal cations, and such as at least 4 different rare earth metal cations. The combination of 2 or more rare earth metal cations in the lattice has the advantage that the absorption spectrum and/or the emission spectrum of the nanoscale particles are shifted relative to lattices containing only one type of rare earth metal cation.

The lattice of the rare earth metal cation-containing nanoscale particles may e.g. have a stoichiometric formula of approximately Ln(P₁₋ₓVₓ)O₄:RE, wherein x is a number in the range of 0 to 1, and :RE³⁺ symbolises that the lattice is doped with one or more different rare earth metal cations.

Excitation of the above mentioned materials require UV light sources (LEDs or discharge lamps), since the respective charge-transfer and 4f-5d transitions of the rare-earth activators are located at wavelength below 350 nm. However, in the case of most of the RE³⁺ cations absorption of UV-A or visible light due to 4f-4f transitions is feasible, but only in very narrow wavelength ranges, e.g. at 390 - 400 nm and 464 - 466 nm for Eu³⁺.

This problem, may be solved by employing antenna ligands, which bind to the nanoscale particle and can act as antennas by absorbing electromagnetic radiation in the UV-A and/or visible spectral range and transferring electromagnetic radiation to the metal ions of the lattice.

An example of this embodiment is illustrated in Fig. 2, which shows a nanoscale particle (1) comprising a lattice (2) to which antenna ligands (4) are attached.

It should be noted that other types of ligands, such as carboxylic acid ligands, may also be attached to the lattice, thus in an embodiment of the invention both an antenna ligand and a carboxylic acid ligand are attached to the lattice.

It is envisioned that the antenna ligand may be a carboxylic acid ligand meaning that the antenna ligand also may comprise a carboxylic acid group.

In the context of the present invention and the ligands used herein, the term "attached to the lattice" encompasses both ligands attached directly to the lattice and ligands attached to the lattice via an intermediate molecule or layer.

In preferred embodiments of the invention, at least one nanoscale particle comprises an antenna ligand which absorbs electromagnetic radiation of a wavelength in the range of 250-600 nm, such as in the range 275-500 nm, or in the range 300-500 nm.

Particularly interesting are the following antenna ligands:
- acetylacetonate and its substituted derivates, e.g. dibenzoylmethanoate, 2-thenoyltrifluor-acetylacetonate, hexafluoracetylacetonate, or 4,4,4,-trifluor-1-(2-naphthyl)-1,3-butandionate
- 2,2'-bipyridyl and its substituted derivatives, e.g. 4,4'-dimethyl-2,2'-bipyridine
- phenanthroline and its substituted derivatives, e.g. diphenylphenanthroline
- 2-picolinate and its substituted derivatives, e.g. 4-methyl-2-picolinate
- benzoate and its substituted derivatives, e.g.. 2,4-di-tert-butylbenzoate
- cinnamate and its substituted derivatives, e.g.4-methyl-cinnamate
- dipyridophenazin and its substituted derivatives,
- benzoate and its substituted derivatives, e.g. 4-methylbenzoate.
- as well as any mixture of these.

In preferred embodiments of the invention, at least one nanoscale particle, and preferably most or all nanoscale particles, of the colloidal suspension is(are) conjugated with a capture element.

A range of useful capture elements are available for the person skilled in the art and any of those are may be used with the present invention. For example, at least one capture element may be selected from the group consisting of an antibody, an antigen, a protein, biotin, avidin, streptavidin, an enzyme, a peptide, an inhibitor, a hormone, a cell surface receptor, RNA, DNA (single strand), LNA, PNA, and a combination thereof.

The capture element may e.g. be a hydrophobic capture element and/or a charged capture element.

Useful hydrophobic capture elements are e.g. hydrocarbon groups group as C8 and C18, which are commonly used in liquid chromatography to create a non-polar solid phase.

Useful charged capture elements are cationic and/or anionic groups that are frequently used for ion exchange applications. Cationic capture elements may e.g. comprise amines such as polyamines or quaternary amines. Anionic capture elements may e.g. comprise sulfonic acids or carboxylic acids, such as poly carboxylic acids.

Another aspect relates to a method of preparing a suspension of nanoscale particles, the method comprising the steps of
a) providing a solution having a pH in the range of 8-14, said solution comprising
   - a lanthanide cation (Ln³⁺) complexed with a chelating agent
   - a source of ortho-phosphate and/or ortho-vanadate,
   - a carboxylic acid ligand, and
   - a solvent,
b) incubating the solution at a temperature and for a time sufficient for nanoscale particles to form, thus obtaining a suspension of nanoscale particles.

In embodiments of the invention, the solution of step a) furthermore comprises a rare earth metal cation (RE³⁺), preferably complexed with a chelating agent. The solution of step a) may e.g. comprise at least 2 different rare earth metal cations.

The pH of the solution of step a) may e.g. be in the range pH 9-12, such as in the range of pH 9-10.

The method may furthermore comprise a step c) of adjusting the pH of the suspension of step b) to a pH in the range pH 1-8, such as in the range pH 2-7, or in the range pH 3-6.

The method may further more comprise a step d) of purifying the nanoscale particles. The purification may involve well-known purification methods such dialysis, gel chromatography, affinity chromatography, nanofiltration, ultra centrifugation, or a combination thereof.

The chelating agent is preferably an at least tetradentate chelating agent, such as an at least pentadentate chelating agent, or an at least hexadentate chelating agent. An at least tetradentate chelating agent is capable of forming at least 4 co-ordinate bonds with the same metal ion, an at least pentadentate chelating agent is capable of forming at least 5 co-ordinate bonds with the same metal ion, and an at least hexadentate chelating agent is capable of forming at least 6 co-ordinate bonds with the same metal ion.

Useful tetradentate chelating agents are e.g. corrole molecules, heme molecules, triethylenetetramine (trien), tris(2-aminoethyl)amine (tren), tris(2-diphenylphosphineethyl)amine, and nitrilotriacetic acid (nta).

A useful pentadentate chelating agents is e.g ethylenediaminetriacetate.

Useful hexadentate chelating agents are e.g. ethylenediaminetetraacetate (EDTA) and 1,10-diaza-4,7,13,16,21,24-hexaoxabicyclo[8.8.8]hexacosane (Cryptand [2,2,2]).

In preferred embodiments of the invention, the chelating agent is EDTA.

The lanthanide cation (Ln³⁺) of the solution, and optionally also one or more rare earth metal cations, is(are) complexed with the chelating agent and may at the same time be hydrated and/or bound to other complexing agent of the solution, such as e.g. OH⁻, chloride, or acetate.

The source of ortho-phosphate and/or ortho-vanadate can be any compound that provides ortho-phosphate and/or ortho-vanadate during the incubation of step b). Nonlimiting examples are H₂PO₄⁻, HPO₄²⁻, di-phosphates, tri-phosphates, oligophosphates, di-vanadates, tri-vanadates, oligovanadates, and any combination of these.

It is envisioned that the lattice can be based on Ln-phosphates or on Ln-vanadates or on Ln-vanadates/phosphates, i.e. the lattice may contain a mixture of phosphate and vanadate.

Typically, at least one carboxylic acid ligand of the solution has a pKₛ value in the range of 5-14, and preferably in the range 6-1, such as in the range 7-11.

The present inventors have found that carboxylic acid ligand having a pKₛ value in the range of 5-14 advantageously can used to stabilise the nanoscale particles in protic solvents both during the incubation and also in the final suspension.

The at least one carboxylic acid ligand may e.g. be selected from the group consisting of ascorbic acid, citric acid, tartaric acid, malonic acid, squaric acid, oxalic acid, or mixtures thereof.

In preferred embodiments of the invention, the carboxylic acid ligand is citric acid.

The solvent of the solution is preferably a protic solvent. It may e.g. comprise at least one liquid selected from the group consisting of water, ethanol, methanol, propanol, and mixtures thereof.

The solution can contain Ln³⁺, chelating agent, source of ortho-phosphate and/or ortho-vanadate, carboxylic acid ligand and optionally also RE³⁺ in a wide range of concentrations. It should be noted that when mentioning concentrations of the solution reference is made to the total concentration of the respective entity, i.e. in any form or type of complex.

In embodiments of the invention, the solution of step a) contains:
- Ln³⁺ and RE³⁺ in a total concentration, i.e. Ln³⁺+ RE³⁺, in the range of 0.1-500 mM,
- chelating agent in a concentration in the range of 0.1-500 mM,
- source of ortho-phosphate and/or ortho-vanadate so that the total concentration of provided ortho-phosphate and ortho-vanadate during the incubation is in the range of 0.1-500 mM, and
- carboxylic acid ligand in a concentration in the range of 0.001-100 mM,

In preferred embodiments of the invention, the solution of step a) contains
- Ln³⁺ and RE³⁺ in a total concentration, i.e. Ln³⁺+ RE³⁺, in the range of 1-100 mM,
- chelating agent in a concentration in the range of 1-100 mM,
- source of ortho-phosphate and/or ortho-vanadate so that the total concentration of provided ortho-phosphate and ortho-vanadate during the incubation is in the range of 1-100 mM, and
- carboxylic acid ligand in a concentration in the range of 0.01-20 mM.
   For example, the solution of step a) may contain
- Ln³⁺ and RE³⁺ in a total concentration, i.e. Ln³⁺+ RE³⁺, in the range of 5-50 mM,
- chelating agent in a concentration in the range of 5-50 mM,
- source of ortho-phosphate and/or ortho-vanadate so that the total concentration of provided ortho-phosphate and ortho-vanadate during the incubation is in the range of 5-50 mM, and
- carboxylic acid ligand in a concentration in the range of 0.1-5 mM.

The molar ratio between Ln³⁺+ RE³⁺ : chelating agent : XO₄³⁻ in the solution of step a) is typically in the range 0.5-2 : 0.5-2 : 0.5-2, preferably in the range 0.75-1.5 : 0.75-1.5 : 0.75-1.5, and even more preferred in the range 0.9-1.1 : 0.9-1.1 : 0.9-1.1, such as approximately 1:1:1. XO₄³⁻ is the sum of VO₄³⁻ and PO₄³⁻.

The molar ratio between Ln³⁺: RE³⁺ is normally in the range 100:0.1 - 100: 200, such as 100:1 - 100:100, and preferably in the range 100:2-100:50, such as 100:3-100:20.

The solution of step a) should be incubated at a temperature and for a time sufficient for nanoscale particles to form. The incubation may e.g. take place at a temperature in the range of 40-120°C, such as in the range of 50-110°C, and preferably in the range 70-100°C, such as in the range 80-95°C.

The incubation may be performed at a wide range of pressures. It is typically performed either at atmospheric pressure when performed in an open reactor or at higher pressures when performed in a closed reactor.

The solution of step a) should be incubated for a time sufficient for the nanoscale particles to form. Typically the solution is incubated for at least 0.5 h and preferably for at least 1 hour, such at for at least 2 hours, at least 5 hours, or at least 10 hours. While there is no theoretical upper limits of how long time the solution should be incubated, it is envisioned that incubation for 0.5-1000 hours is possible and that incubation for 10-20 hours usually is sufficient.

In embodiments of the invention, the incubation of step b) is performed under agitation of solution/suspension. The agitation may e.g. be provided by stirring.

The solution of step a) may be provided in a number of different ways. It may e.g. be provided by:
- dissolving a salt of the lanthanide cation (Ln³⁺), the chelating agent, the carboxylic acid ligand, and optionally a salt of the rare earth metal cation in the solvent at an acidic pH, thus obtaining a mixture,
- dissolving in the mixture a source of ortho-phosphate and/or ortho-vanadate,
- adjusting the pH of the mixture to a pH in the range of 8-14, thus obtaining the solution according to step a).

The preparation the solution of step a) involves the complexation of the trivalent metal cations by the chelating agent (e.g. ethylenediaminetetraacetate (EDTA)). To this end, the original counter ions of the trivalent metals are dissolved in the solvent, wherein they typically form complexes with the trivalent metal. The application of chelating agent results in ligand substitution reactions, since the chelating agent forms thermodynamically more stable metal-ligand bonds than the solvent or the original counter ion. In the case of lanthanide ions dissolved in an aqueous solvent comprising EDTA, the following may take place:

[Ln(H₂O)₉]³⁺ + H₃EDTA → [Ln(EDTA)(OH₂)₃] + 6 H₂O + 3 H⁺

By the formation of chelating agnet (e.g. EDTA) complexes, the Ln³⁺ cations are stabilised in solution up to alkaline pH values, while the Ln³⁺ cations would otherwise precipitate as hydroxides between pH 4 and 5.

As soon as the source of vanadate and/or phosphate (e.g. H₂PO₄⁻) is added to the solution of the chelating agent-metal-complex the remaining sovlent ligands are partly substituted according to the following reaction equation:

[Ln(EDTA)(OH₂)_{3]} + H₂PO₄⁻ → [Ln(EDTA)(OH)(H₂PO₄)]⁻ + 2 H₂O

This complex is stable up to pH 9 at room temperature. Upon incubation according to step b) the complex decomposes, by a reaction equation which may look like this when the chelating agent is EDTA and the source of ortho-phosphate is H₂PO₄⁻.

[Ln(EDTA)(OH)(H₂PO₄)]⁻ + OH⁻ → LnPO₄ + H(EDTA)²⁻ + 2 H₂O

In this way the hydrolysis of the [Ln(EDTA)(OH)(H₂PO₄)]⁻ complex yields colloidal LnPO₄ particles, which will agglomerate and grow to larger particles. Growth and agglomeration is inhibited by the presence of carboxylic acid ligands in the solution, which can strongly coordinate to metals being present at the particle surface.

The process of the invention yields stable colloidal suspensions comprising nanoscale particles with a rather high quantum efficiency of 5% or more, whereby different visible emission colours can be obtained by different dopants and compositions as exemplified in Table 1.

**Table 1 Compositions and emission maxima of the claimed nanoscale particles (a, x, y, z = 0.0 - 1.0). The dopant concentration is the molar percentage of the dopant(s) relative to the total amount of lanthanide and rare earth metal in the lattice of the nanoscale particles.**

| **Composition** | **Emission band/lines [nm]** | **Dopant concentration [%]** |
|---|---|---|
| YPO₄:Ce | 330-360 | 0.0-50 |
| LaPO₄:Ce | 310-330 | 0.0-50 |
| LaPO₄:Ce,Tb | 490,545,590,620 | 0.0-50 |
| GdPO₄:Ce | 311, 330-360 | 0.0-50 |
| (Y₁₋ₓGdₓ)PO₄:Ce | 330-360 | 0.0-50 |
| LuPO₄:Ce | 330-360 | 0.0-50 |
| (Y_{1-x-y-z}GdₓLu_{y}La_{z})(P₁₋ₐVₐ)O₄:Sm | 600-630 | 0.0-10 |
| (Y_{1-x-y-z}GdₓLu_{y}La_{z})(P₁₋ₐVₐ)O₄:Eu | 600-620 | 0.0-10 |
| (Y_{1-x-y-z}GdₓLu_{y}La_{z})(P₁₋ₐVₐ)O₄:Tb | 540-550 | 0.0-10 |
| (Y_{1-x-v-z}GdₓLu_{y}La_{z})(P₁₋ₐVₐ)O₄:Dy | 480 - 490, 570 - 580 | 0.0-10 |
| (Y_{1-x-y-z}GdₓLu_{y}La_{z})(P₁₋ₐVₐ)O₄:Ho | Many lines in the visible | 0.0 - 10 |
| (Y_{1-x-y-z}GdₓLu_{y}La_{z})(P₁₋ₐVₐ)O₄:Er | 400,470,530,620 | 0.0-10 |
| (Y_{1-x-y-z}GdₓLu_{y}La_{z})(P₁₋ₐVₐ)O₄:Tm | 340 - 360, 455 - 465 | 0.0 -10 |
| GdPO₄:Nd | 311 | 0.0-10 |
| (Y₁₋ₓ₋ᵥLuₓLaᵥ)PO₄:Gd | 311 | 0.0-50 |
| (Y_{1-x-y}LuₓLa_{y})VO₄:Gd | 311 | 0.0-50 |
| (Y_{1-x-y}LuₓLa_{y})(P₁₋ₓVₓ)O₄:Gd | 311 | 0.0- 50 |

In preferred embodiments of the invention, the method comprises a further step of attaching an antenna ligand to at least one nanoscale particle. The antenna ligand may e.g. be present in the solution of step a) and/or it may be added during the incubation of step b) and/or it may be added at a later stage.

In preferred embodiments of the invention, the method comprises a further step of conjugating at least one nanoscale particles to a capture element. A wealth of conjugation techniques, such as the ones described in "Using Antibodies: A Laboratory Handbook"; Harlow, E.; Cold Spring Harbor Laboratory Press; 1999, the contents of which are incorporated herein by reference, are well-known to the person skilled in the art and useful for conjugating capture elements to the nanoscale particles.

The capture elements may e.g. be attached via functional groups comprised by the carboxylic acid ligand or other ligands, or they may be attached via other molecules such as funcionalised-silanes, e.g. amino-silanes.

Yet an aspect of the invention relates to a colloidal suspension of nanoscale particles obtainable by the present method of preparing a suspension of nanoscale particles, which suspension preferably has one or more of the characteristics of the nanoscale particles described herein.

A further aspect of the invention relates to a method of detecting a target in an object, the method comprising the steps of
i) providing a colloidal suspension of nanoscale particles, wherein the nanoscale particles are conjugated to a capture element specific to the target,
ii) contacting the object with said colloidal suspension of nanoscale particles,
iii) at least detecting one or more items from the group consisting of:
   - has any nanoscale particle bound to a target in the object,
   - how many nanoscale particles have been bound to a target in the object, and
   - where in the object has the nanoscale particles been bound.

In an embodiment of the invention, the object is a human or animal body.

In another embodiment of the invention, the object is not a human or animal body.

The detecting of step iii) may e.g. involve measuring the luminescence from the nanoscale particles and/or performing magnetic resonance imaging or X-ray imaging using the nanoscale particles as contrast agents.

The method of detecting a target in an object may encompass techniques such as
- ligand, peptide, compound screening,
- protein-protein, DNA-protein interaction studies
- gene expression profiling
- protein expression profiling
- immunohistochemistry (in situ)
- cell labelling and identification
- confocal microscopy investigations
- FACS (fluorescence activated cell sorter) investigations
- as luminescent labels in in-vitro diagnostics(e.g. nucleic acid, enzymatic, immuno and receptor assays, cell assays, tissue analysis)
- or application in biosensors
- for bio-separation processes of any kind, including, but not limited to the use in capture probes for mass spectroscopy-based peptide profiling
- for barcoding and multiplexing in in-vitro and in-vivo applications
- as composite materials, e.g. embedded in any kind of polymer material
- translational research, i.e. the development of novel contrasting agents where optical contrasting in animals is an important step.
- For medical contrasting during intra-operative procedures (e.g. lymph node removal, open heart surgery, tumor margin visualization in surgical procedures)
- biopsy investigations
- imaging procedures, optical imaging, multimodal imaging
- in catheter and endoscope fluorescence in-vivo diagnostic and treatment procedures (e.g. tumors of the gastrointestinal tract, oesophagus, prostate, lung, bladder, cervic, oral cavity)
- localized therapy
- detection of tumors and other abnormalities by monitoring the blood clearance profile of the material
- blood analysis diagnostics (e.g. dialyse)
- for animal imaging, or
- for drug discovery.

Still another aspect of the invention relates to the use of the colloidal suspension of nanoscale particles and to the nanoscale particles as such for luminescent labels and/or for contrast agents, e.g. in
- ligand, peptide, compound screening,
- protein-protein, DNA-protein interaction studies
- gene expression profiling
- protein expression profiling
- immunohistochemistry (in situ)
- cell labelling and idenfication
- confocal microscopy investigations
- FACS (fluorescence activated cell sorter) investigations
- as luminescent labels in in-vitro diagnostics(e.g. nucleic acid, enzymatic, immuno and receptor assays, cell assays, tissue analysis)
- for application in biosensors
- for bio-separation processes of any kind, including, but not limited to the use in capture probes for mass spectroscopy-based peptide profiling
- for barcoding and multiplexing in in-vitro and in-vivo applications
- as composite materials, e.g. embedded in any kind of polymer material
- translational research, i.e. the development of novel contrasting agents where optical contrasting in animals is an important step.
- For medical contrasting during intra-operative procedures (e.g. lymph node removal, open heart surgery, tumor margin visualization in surgical procedures)
- biopsy investigations
- imaging procedures, optical imaging, multimodal imaging
- in catheter and endoscope fluorescence in-vivo diagnostic and treatment procedures (e.g. tumors of the gastrointestinal tract, oesophagus, prostate, lung, bladder, cervic, oral cavity)
- localized therapy
- detection of tumors and other abnormalities by monitoring the blood clearance profile of the material
- blood analysis diagnostics (e.g. dialyse)
- for animal imaging, or
- for drug discovery.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

### EXAMPLES

### Example 1 Colloidal suspension comprising 2-5 nm YPO₄:Eu particles

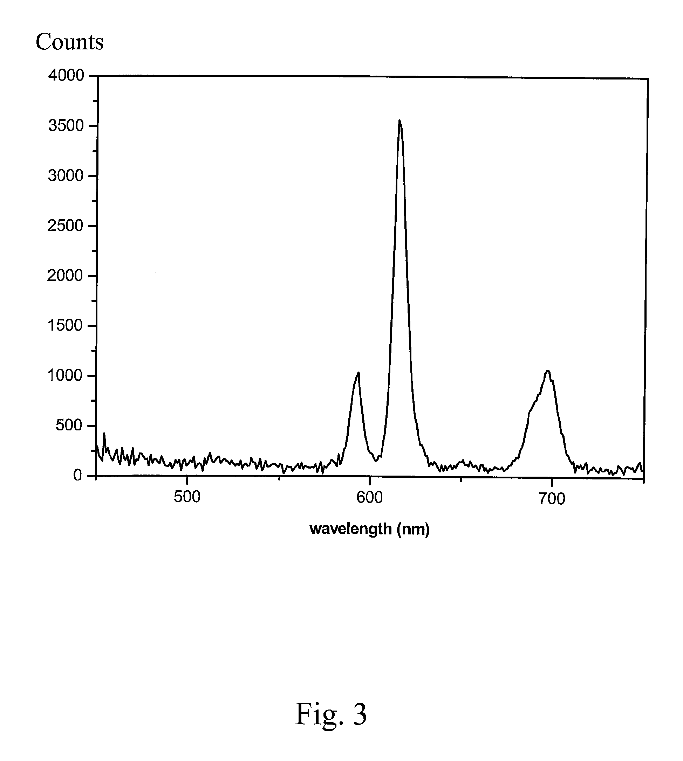

1.011 g (3.8 mmol) Y(CH₃COO)₃^{.}H₂O, 0.064 g (0.2 mmol) Eu(CH₃COO)₃^{.}H₂O and 1.618 g (4 mmol) ethylendiamintetraacetate dipotassium salt are dissolved in 100 mL water. Subsequently 0.05 g (0.2 mmol) citric acid and 0.55 g (4 mmol) potassium dihydrogen phosphate are added to the solution. Then a KOH (50%) solution is drop wisely added, which enhances the pH value to 9 - 10. While heating the solution to 90°C for about 16 h, the formation of nanoscale particles in solution takes place. The formed alkaline, clear, colourless, colloidal suspension is further stirred for 1 to 2 hours slowly cooled down to room temperature. Then the pH value of the colloidal suspension is decreased up to pH 7 by addition of acetic acid. The obtained colloidal suspension shows strong red luminescence, independent of pH value under excitation at 366 nm. Afterwards, the colloidal suspension is characterised by Dynamic Light Scattering (Malvern Nanosizer) and Spectroscopy. The d₅₀-value was determined to 3.6 nm and nanoscale particles has a particle size in the range 2-6 nm. The resulting emission spectrum is shown in Fig. 3.

### Example 2 Colloidal suspension comprising 2 - 5 nm YPO₄:Tb particles

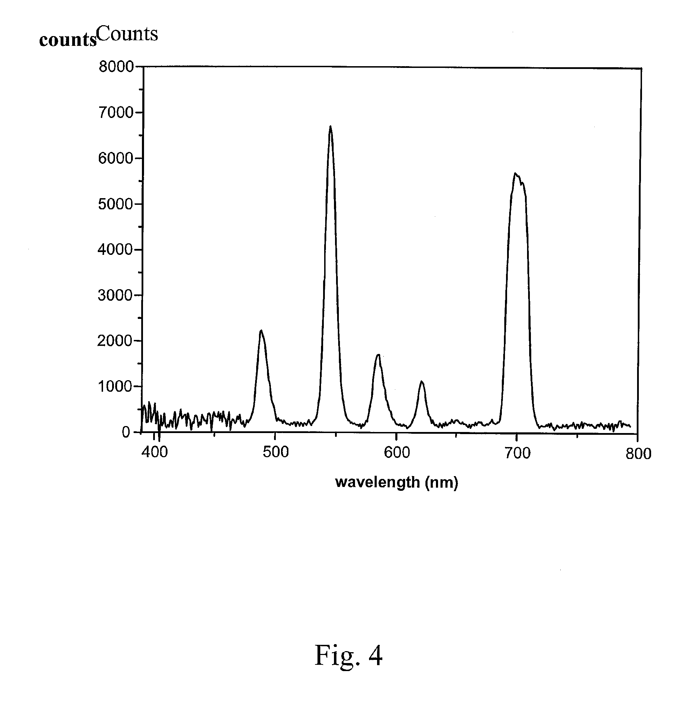

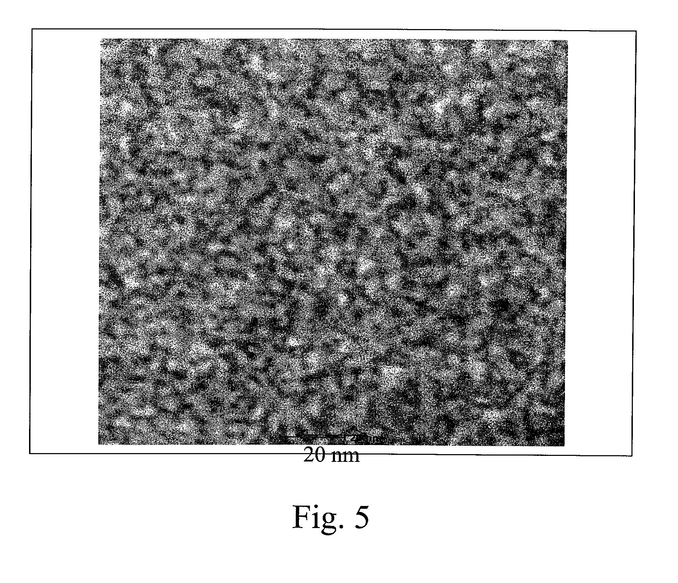

0.958 g (3.6 mmol) Y(CH₃COO)₃^{.}H₂O, 0.135 g (0.4 mmol) Tb(CH₃COO)₃H₂O and 1.618 g (4 mmol) ethylendiamintetraacetate dipotassium salt are dissolved in 100 mL water. Subsequently 0.05 g (0.2 mmol) citric acid and 0.55 g (4 mmol) potassium dihydrogen phosphate are added to the solution. Then a KOH (50%) solution is drop wisely added, which enhances the pH value to 9 - 10. While heating the solution to 90°C for about 16 h, the formation of nanoscale particles in solution takes place. The formed alkaline, clear, colourless, colloidal suspension is further stirred for 1 to 2 hours and then slowly cooled down to room temperature. Then the pH value of the colloidal suspension is decreased up to pH 7 by addition of acetic acid. The obtained colloidal suspension shows green luminescence, independent of pH value under excitation at 366 nm. Afterwards, the colloidal suspension is characterised by Dynamic Light Scattering (Malvern Nanosizer), Spectroscopy and TEM studies. The d₅₀-value was determined to 4.8 nm and nanoscale particles has a particle size in the range 4-8 nm. The resulting emission spectrum is shown in Fig. 4 and the TEM image is shown in Fig. 5. The bright regions of the TEM image are the YPO4:Tb(10%) particle having a diameter between 3 and 4 nm.

### Example 3 Colloidal suspension comprising 2 - 5 nm YPO₄:Gd particles

1.054 g (3.96 mmol) Y(CH₃COO)₃^{.}H₂O, 0.013 g (0.04 mmol) Gd(CH₃COO)₃H₂O and 1.618 g (4 mmol) ethylendiamintetraacetate dipotassium salt are dissolved in 100 mL water. Subsequently 0.05 g (0.2 mmol) citric acid and 0.55g (4 mmol) potassium dihydrogen phosphate are added to the solution. Then a KOH (50%) solution is drop wisely added, which enhances the pH value to 9 - 10. While heating the solution to 90°C for about 16 h, the formation of nanoscale particles in solution takes place. The formed alkaline, clear, colourless, colloidal suspension is further stirred for 1 to 2 hours slowly cooled down to room temperature. Then the pH value of the colloidal suspension is decreased up to pH 7 by addition of acetic acid. The obtained colloidal suspension show UV-B luminescence having a λₘₐₓ of 312 nm, independent of pH value under excitation at 273 nm. Afterwards, the colloidal suspension is characterised by Dynamic Light Scattering. The d₅₀-value was determined to 2.7 nm and nanoscale particles has a particle size in the range 1.8-5 nm.

## Claims

1. A colloidal suspension of nanoscale particles comprising:
a population of nanoscale particles comprising
a lattice which comprises:
- vanadate and/or phosphate,
- a lanthanide cation (Ln³⁺),
and a carboxylic acid ligand having a pKₛ value in the range of 5-14, said carboxylic acid ligand is attached to said lattice, and
a solvent.

2. The colloidal suspension of nanoscale particles according to claim 1, wherein the lattice furthermore comprises a rare earth metal cation (RE³⁺).

3. A colloidal suspension of nanoscale particles according to claim 1, wherein the lattice of the nanoscale particles has an stoichiometric formula of approximately Ln(P₁₋ₓVₓ)O₄, wherein x is a number in the range of 0 to 1.

4. A colloidal suspension of nanoscale particles according to claim 2, wherein the lattice of the nanoscale particles has an stoichiometric formula of approximately Ln(P₁₋ₓVₓ)O₄:RE³⁺, wherein x is a number in the range of 0 to 1, and :RE³⁺ symbolises that the lattice is doped with one or more different rare earth metal cations.

5. The colloidal suspension of nanoscale particles according to any of the preceding claims, wherein the nanoscale particles have a particle size in the range of 1 nm - 20 nm.

6. The colloidal suspension of nanoscale particles according to any of the preceding claims, wherein the population of nanoscale particles have a size distribution where d₁₀>2 nm and d₉₀<15 nm.

7. The colloidal suspension of nanoscale particles according to any of the preceding claims, wherein at least one lanthanide cation is selected from the group consisting of Sc³⁺, Y³⁺, La³⁺, Gd³⁺, and Lu³⁺.

8. The colloidal suspension of nanoscale particles according to any of the preceding claims, wherein at least one rare earth metal cation is selected from the group consisting of Ce³⁺, Or³⁺, Nd³⁺, Sm³⁺, Eu³⁺, Gd³⁺, Tb³⁺, Dy³⁺, Ho³⁺, Er³⁺, Tm³⁺, and Yb³⁺.

9. The colloidal suspension of nanoscale particles according to any of the claims 2, 4-8, wherein the lattice comprises at least 2 different rare earth metal cations.

10. The colloidal suspension of nanoscale particles according to any of the preceding claims, wherein the lattice comprises at least two different types of lanthanide cations.

11. The colloidal suspension of nanoscale particles according to any of the preceding claims, wherein at least one nanoscale particle comprises an antenna ligand which absorbs electromagnetic radiation of a wavelength in the range of 250-600 nm.

12. The colloidal suspension of nanoscale particles according to any of the preceding claims, wherein at least one nanoscale particle of the colloidal suspension is conjugated with a capture element.

13. The colloidal suspension of nanoscale particles according to claim 12, wherein at least one capture element is selected from the group consisting of an antibody, an antigen, a protein, an enzyme, a peptide, an inhibitor, a hormone, a cell surface receptor, RNA, DNA, LNA, and PNA.

14. A method of preparing nanoscale particles, the method comprising the steps of
a) providing a solution having a pH in the range of 8-14, said solution comprising
- a lanthanide cation (Ln³⁺) complexed with a chelating agent,
- a source of ortho-phosphate and/or ortho-vanadate,
- a carboxylic acid ligand, and
- a solvent,
b) incubating the solution at a temperature and for a time sufficient for nanoscale particles to form.

15. The method according to claim 14, wherein the solution of step (a) furthermore comprises a rare earth metal cation (RE³⁺) complexed with a chelating agent.

16. The method according to claim 14 or 15, wherein at least one chelating agent is at least a tetradentate chelating agent.

17. The method according to any of the claims 14-16, wherein at least one carboxylic acid ligand has a pKₛ value in the range of 5-14.

18. The method according to any of the claims 14-17, wherein the method comprises a further step of conjugating at least one nanoscale particles to a capture element.

19. A colloidal suspension of nanoscale particles obtainable by the method according to any of the claims 14-18.

20. A method of detecting a target in an object, the method comprising the steps of
i) providing a colloidal suspension of nanoscale particles according to any of claims 1-13 and 19,
ii) contacting the object with said colloidal suspension of nanoscale particles,
iii) at least detecting one or more items from the group consisting of:
- has any nanoscale particle bound to the target in the object,
- how many nanoscale particles have been bound to the target in the object, and
- where in the object have the nanoscale particles been bound.
